# EUROPEAN PATENT APPLICATION

(11) **EP 2 661 090 A1**
(43) Date of publication of application: **06.11.2013**
(21) Application number: 11857363.3
(22) Date of filing: 01.09.2011
(51) Int. Cl.: H04N 21/234

(54) **BEARING METHOD, AND PROCESSING METHOD, DEVICE AND SYSTEM OF AUXILIARY VIDEO SUPPLEMENTAL INFORMATION**

(30) Priority: 28.01.2011 CN 201110031704
(71) Applicant: Huawei Technologies Co., Ltd., Shenzhen, Guangdong 518129 (CN)
(72) Inventor: HUI, Yu, Shenzhen Guangdong 518129 (CN); ZHANG, Yuanyuan, Shenzhen Guangdong 518129 (CN); SHI, Teng, Shenzhen Guangdong 518129 (CN); ZHANG, Chuxiong, Shenzhen Guangdong 518129 (CN)
(74) Representative: Pfenning, Meinig & Partner GbR
(86) International application number: PCT/CN2011/079233
(87) International publication number: WO 2012/100537

(57) **Abstract**

A method for bearing auxiliary video supplemental information is provided. The method includes: bearing auxiliary video supplemental information in a video bit stream; and distributing the video bit stream to a transmission network to generate a media stream, or distributing the video bit stream to a medium. A method for processing auxiliary video supplemental information is provided. The method includes: acquiring a video bit stream, where the video bit stream includes an auxiliary video, a main video corresponding to the auxiliary video, and auxiliary video supplemental information; decoding the video bit stream to obtain the auxiliary video, the main video, and the auxiliary video supplemental information; and performing synthetic calculation and display according to the auxiliary video, the main video, and the auxiliary video supplemental information. In addition, a media content server and a terminal are provided. A universal content distribution interface can be provided for media content that includes an auxiliary video, a main video corresponding to the auxiliary video, and auxiliary video supplemental information by using the present invention.

## Description

This application claims priority to Chinese Patent Application No. 201110031704.1, filed with the Chinese Patent Office on January 28, 2011 and entitled "METHOD FOR BEARING AUXILIARY VIDEO SUPPLEMENTAL INFORMATION, AND METHOD, APPARATUS, AND SYSTEM FOR PROCESSING AUXILIARY VIDEO SUPPLEMENTAL INFORMATION", which is incorporated herein by reference in its entirety.

### TECHNICAL FIELD

The present invention relates to the field of video technologies, and in particular, to a method for bearing auxiliary video supplemental information, and a method, an apparatus, and a system for processing auxiliary video supplemental information.

### BACKGROUND

A two-dimensional video is only capable of transmitting plane information of an object, and a user can sense only a height, width, color, grain, and the like of the object; whereas a three-dimensional video may further express depth information and the like of the object, and the user can sense a concave/convex, distance, and the like of the object. A 3D video may use different data formats. A two-dimensional plus auxiliary video (2d plus auxiliary video) is a common 3D format.

The two-dimensional plus auxiliary video format has advantages such as bandwidth saving, backward compatibility, and depth adjustment, and particularly requires a bandwidth increase of only 10% to 20% during transmission as compared with one video; and can be widely applied in multiple bandwidth-restricted environments. Representation of data of the two-dimensional plus auxiliary video format includes a two-dimensional video, an auxiliary video of the two-dimensional video, and auxiliary video supplemental information (Auxiliary video supplemental information, AVSI). When acquiring three-dimensional content expressed in the two-dimensional plus auxiliary video format, a three-dimensional display terminal needs to obtain the two-dimensional video, the auxiliary video, and the auxiliary video supplemental information. In the prior art, a video bit stream is generated by coding the two-dimensional video and the auxiliary video; the video bit stream is distributed to different transmission systems and media according to an interface for distributing video bit streams; and the auxiliary video supplemental information is borne by adding a new descriptor to a TS transport layer. As a new bearer structure needs to be added to the transport layer or a medium to bear the auxiliary video supplemental information, specific implementation solutions corresponding to different transmission systems and media are different, thereby increasing the configuration cost and adaptation difficulties.

### SUMMARY

Embodiments of the present invention provide a method for bearing auxiliary video supplemental information, and a method, an apparatus, and a system for processing auxiliary video supplemental information; and offer a universal content distribution interface for media content that includes an auxiliary video, a main video corresponding to the auxiliary video, and auxiliary video supplemental information.

According to one aspect, an embodiment of the present invention provides a method for bearing auxiliary video supplemental information. The method includes: bearing auxiliary video supplemental information in a video bit stream; and distributing the video bit stream to a transmission network to generate a media stream, or distributing the video bit stream to a medium.

According to another aspect, an embodiment of the present invention further provides a method for processing auxiliary video supplemental information. The method includes: acquiring a video bit stream, where the video bit stream includes an auxiliary video, a main video corresponding to the auxiliary video, and auxiliary video supplemental information; decoding the video bit stream to obtain the auxiliary video, the main video, and the auxiliary video supplemental information; and performing synthetic calculation and display according to the auxiliary video, the main video, and the auxiliary video supplemental information.

According to still another aspect, an embodiment of the present invention further provides a media content server. The server includes: a video bit stream generating unit, configured to generate a video bit stream of media content, where the video bit stream of media content bears auxiliary video supplemental information; and a video bit stream distributing unit, configured to distribute the video bit stream generated by the video bit stream generating unit to a transmission network to generate a media stream, or distribute the video bit stream to a medium.

According to yet another aspect, an embodiment of the present invention further provides a terminal for displaying media content. The terminal includes: an acquiring unit, configured to acquire a video bit stream, where the video bit stream includes an auxiliary video, a main video corresponding to the auxiliary video, and auxiliary video supplemental information; a decoding unit, configured to decode the video bit stream acquired by the acquiring unit to obtain the auxiliary video, the main video, and the auxiliary video supplemental information; and a processing unit, configured to perform synthetic calculation and display according to the auxiliary video, the main video, and the auxiliary video supplemental information that are obtained from the decoding performed by the decoding unit.

According to yet still another aspect, an embodiment of the present invention further provides a system for playing a video. The system includes: a server, configured to generate a video bit stream of media content, and distribute the video bit stream to a transmission network to generate a media stream, or distribute the video bit stream to a medium, where the video bit stream bears auxiliary video supplemental information; and a terminal, configured to acquire the video bit stream generated by the server, where the video bit stream includes an auxiliary video, a main video corresponding to the auxiliary video, and the auxiliary video supplemental information; decode the video bit stream to obtain the auxiliary video, the main video, and the auxiliary video supplemental information; and perform synthetic calculation and display according to the auxiliary video, the main video, and the auxiliary video supplemental information.

In the solutions according to the embodiments, when media content that includes an auxiliary video, a main video corresponding to the auxiliary video, and auxiliary video supplemental information is coded, a video bit stream may be generated by coding the auxiliary video, the main video, and the auxiliary video supplemental information; and then the media content is distributed to different multimedia systems by using an interface between the video bit stream and a physical transmission device, so that the auxiliary video supplemental information may be directly carried in the video bit stream for transmission without adding, for the auxiliary video supplemental information, a new bearer structure to an operational network or a medium, thereby reducing the content distribution cost and adaptation difficulties. The solutions feature good network affinity and may be applied to transmission and media storage on various transmission networks.

### BRIEF DESCRIPTION OF DRAWINGS

FIG. 1 is a flowchart of a method for bearing auxiliary video supplemental information according to an embodiment of the present invention;

FIG. 2 is a flowchart of a method for processing auxiliary video supplemental information according to an embodiment of the present invention;

FIG. 2a is a schematic diagram of a connection relationship in a system according to an embodiment of the present invention;

FIG. 3 is a functional block diagram of a server 10 according to an embodiment of the present invention;

FIG. 4 is a first detailed functional block diagram of a video bit stream generating unit 301 of a server 10 according to an embodiment of the present invention;

FIG. 5 is a second detailed functional block diagram of a video bit stream generating unit 301 of a server 10 according to an embodiment of the present invention;

FIG. 6 is a functional block diagram of a terminal 20 according to an embodiment of the present invention;

FIG. 7 is a first detailed functional block diagram of a decoding unit 602 of a terminal 20 according to an embodiment of the present invention; and

FIG. 8 is a second detailed functional block diagram of a decoding unit 602 of a terminal 20 according to an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

### Embodiment 1

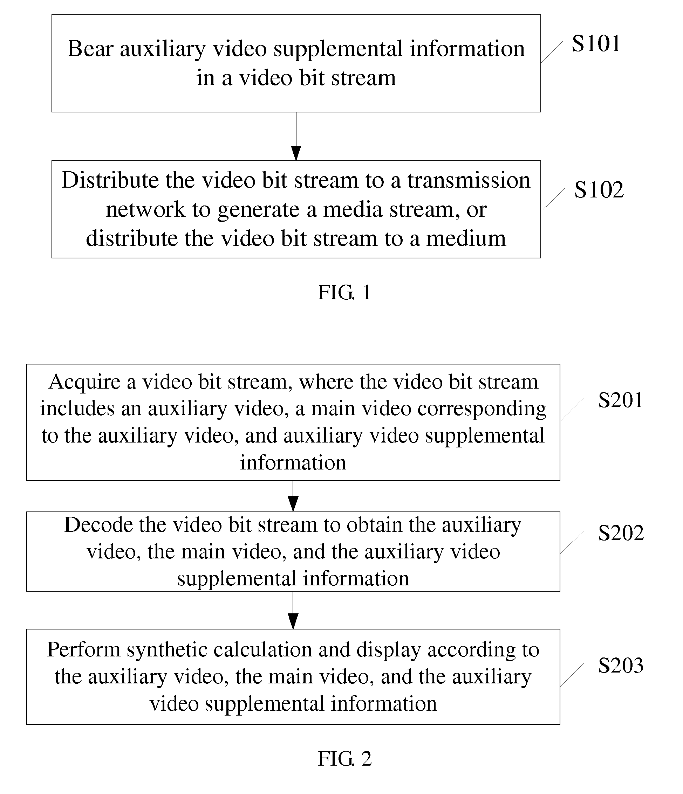

This embodiment provides a method for bearing auxiliary video supplemental information. FIG. 1 is a flowchart of the method. As shown in FIG. 1, the method includes the following steps:

S101. Bear auxiliary video supplemental information in a video bit stream.

S102. Distribute the video bit stream to a transmission network to generate a media stream, or distribute the video bit stream to a medium.

Optionally, the auxiliary video supplemental information in this embodiment is information used for synthetic calculation with an auxiliary video, and includes but is not limited to one or more combinations of the following information:
1. Auxiliary video type. Different types of auxiliary videos correspond to respective supplemental information types. For example, when the auxiliary video is a depth map, a corresponding supplemental information type is 1;
2. Spatial mapping between the auxiliary video and a main video corresponding to the auxiliary video. When the main video and the auxiliary video use different sampling frequencies, a spatial mapping between sampling points of the two videos is described. In a general case, one pixel of the main video corresponds to one pixel of the auxiliary video. Sub-sampling may be applied to the auxiliary video so as to properly compress the auxiliary video and meet transmission at a low bit rate; and
3. Calculation parameters corresponding to different types of auxiliary videos.

There are numerous types of auxiliary videos, and their functions also vary according to different types. When a type of an auxiliary video is a depth map or a parallax map, it may be applied to three-dimensional content display; and the type of the auxiliary video may also be transparency information that describes a main video or the like. A definition of auxiliary video supplemental information also varies according to different types of auxiliary videos.

Optionally, S101 may include: performing video coding for the auxiliary video and the auxiliary video supplemental information to generate a bit stream of the auxiliary video; and performing video coding for the main video corresponding to the auxiliary video to generate a bit stream of the main video.

Specifically, when H.264 is used to perform the video coding for the auxiliary video and the auxiliary video supplemental information, a NAL (Network abstraction layer, network abstraction layer) unit in the bit stream of the auxiliary video may be used to bear the auxiliary video supplemental information.

Specifically, when H.264 is used to perform the video coding for the auxiliary video and the auxiliary video supplemental information, an SEI (Supplemental enhancement information, supplemental enhancement information) message in an SEI NAL unit of the bit stream of the auxiliary video may also be used to bear the auxiliary video supplemental information.

Specifically, when the MPEG2 (Motion Picture Expert Group, motion picture expert group) standard is used to perform the video coding for the auxiliary video and the auxiliary video supplemental information, the auxiliary video supplemental information may be borne by a user data structure in the bit stream of the auxiliary video.

The foregoing three specific implementation manners are described in detail in embodiments to follow later.

Optionally, S101 may further include: performing video coding jointly for the auxiliary video, the auxiliary video supplemental information, and the main video corresponding to the auxiliary video to generate one video bit stream.

Specifically, when H.264 is used to perform the video coding jointly for the auxiliary video, the auxiliary video supplemental information, and the main video corresponding to the auxiliary video, a NAL unit may be used to bear the auxiliary video supplemental information.

Specifically, when H.264 is used to perform the video coding jointly for the auxiliary video, the auxiliary video supplemental information, and the main video corresponding to the auxiliary video, an SEI message in an SEI NAL unit may also be used to bear the auxiliary video supplemental information.

The specific implementation manner is described in detail in embodiments to follow later.

In the method according to this embodiment, auxiliary video supplemental information is directly carried in a video bit stream for transmission; media content that includes an auxiliary video, a main video corresponding to the auxiliary video, and the auxiliary video supplemental information is coded to generate a video bit stream; and an interface between the video bit stream and a physical transmission device is utilized to directly distribute the media content to different multimedia systems, thereby offering a universal content distribution interface for the media content; and same media content may be directly distributed to different multimedia systems through the universal interface without adding, for the auxiliary video supplemental information, a new bearer structure to an operational network or a medium, thereby reducing the content distribution cost and difficulties. This solution features good network affinity and may be applied to transmission and media storage on various transmission networks.

### Embodiment 2

This embodiment provides a specific method for bearing auxiliary video supplemental information. In this embodiment, H.264 is used to bear media content that includes an auxiliary video, a main video corresponding to the auxiliary video, and auxiliary video supplemental information. A NAL unit of H.264 standardizes a format of video data, and is a universal interface from a video bit stream to a transmission network or a medium. In this embodiment, a type of NAL unit is added. The NAL unit is used to bear auxiliary video supplemental information in a video bit stream.

Specifically, the method according to this embodiment includes: performing video coding for an auxiliary video, a main video corresponding to the auxiliary video, and auxiliary video supplemental information to generate a video bit stream, where the auxiliary video, the main video corresponding to the auxiliary video, and the auxiliary video supplemental information are included in media content, and the video bit stream includes a newly added NAL unit used to bear the auxiliary video supplemental information; and distributing the video bit stream to a transmission network or a medium. In this way, after acquiring the video bit stream through the transmission network or the media, a terminal may obtain the auxiliary video, the main video corresponding to the auxiliary video, and the auxiliary video supplemental information from the video bit stream, and perform synthetic calculation and display. This embodiment may be further divided into the following two cases according to different coding manners used for the main video and the auxiliary video:

(1) First case: Video coding is performed independently for the auxiliary video and the main video corresponding to the auxiliary video to obtain two H.264 video bit streams, that is, a bit stream of the main video and a bit stream of the auxiliary video. The auxiliary video supplemental information is carried in the bit stream of the auxiliary video.

A video bit stream output by an H.264 coder includes a series of NAL units, which provide a universal interface between a codec and a transmission network or a medium. NAL units of multiple types are defined in H.264, and may be used to bear video frames. The NAL units may also bear information related to video frame coding/decoding or display. Table 1 shows some NAL units included in an H.264 video bit stream and sequence of arranging these NAL units.

**Table 1**

| | | | | | |
|---|---|---|---|---|---|
| Access Unit Delimiter NAL Unit (access unit delimiter NAL unit) | SPS NAL Unit (sequence parameter set NAL unit) | SEI NAL Unit (supplemental enhancement information NAL unit) | PPS NAL Unit (picture parameter set NAL unit) | Slice NAL Unit (Primary coded picture, primary coded picture) | Slice NAL Unit (Redundant coded picture, redundant coded picture) |

Table 2 shows content of the newly added NAL unit in this embodiment. The "MPEG C Part-3" standard defines auxiliary video supplemental information. A defined structure is "Si_rbsp". In this embodiment, the supplemental information structure "Si_rbsp" defined in "MPEG C Part-3" is used as an example of supplemental information in this embodiment. In the bit stream of the auxiliary video, a video frame serves as a primary coded picture and is borne by a NAL unit. The auxiliary video supplemental information is transmitted at least along with each IDR (Instantaneous Decoding Refresh, instantaneous decoding refresh) picture or RAP (Random access point, random access point). For a specific "nal_unit_type", a reserved value may be used according to a definition in the H.264 specification.

**Table 2**

| | |
|---|---|
| nal_unit_type | Content of the NAL unit and RBSP syntactic structure |
| 16 | Auxiliary video supplemental information si_rbsp() |

In this embodiment, a NAL unit is added and used to bear the auxiliary video supplemental information in the bit stream of the auxiliary video. After receiving the bit stream of the auxiliary video that includes the auxiliary video and the auxiliary video supplemental information, the terminal needs to perform synthetic calculation of the auxiliary video supplemental information and the primary coded picture (primary coded picture) in the bit stream of the auxiliary video.

(2) Second case: "Auxiliary Picture" syntax in H.264 is used to perform video coding for the auxiliary video and the main video corresponding to the auxiliary video to generate one H.264 video bit stream. Table 3 shows some NAL units included in an H.264 video bit stream that carries an Auxiliary Picture and sequence of arranging these NAL units. As shown in Table 3, a main video frame serves as a primary coded picture and is borne by a NAL unit; and an auxiliary video frame serves as an auxiliary coded picture (auxiliary coded picture) and is borne by a NAL unit with the "nal_unit_type" being 19. According to definitions in H.264, the auxiliary video and the main video have a same size.

**Table 3**

| | | | | | | |
|---|---|---|---|---|---|---|
| Access Unit delimiter NAL Unit (access unit delimiter NAL unit) | SPS NAL Unit (sequence parameter set NAL unit) | SEI NAL Unit (supplemental enhancement information NAL unit) | PPS NAL Unit (picture parameter set NAL unit) | Slice NAL Unit (Primary coded picture, primary coded picture) | Slice NAL Unit (Redundant coded picture, redundant coded picture) | Slice NAL Unit (Auxiliary coded picture, auxiliary coded picture) |

In this embodiment, a NAL unit is added and used to bear the auxiliary video supplemental information in the video bit stream. A receiving terminal needs to synthesize the auxiliary video supplemental information and the auxiliary coded picture in the video bit stream. Table 4 shows a format definition of the newly added NAL unit. For a specific "nal_unit_type", a reserved value may be used according to a definition in the H.264 specification.

**Table 4**

| nal_unit_type | Content of the NAL unit and RBSP syntactic structure |
|---|---|
| 18 | Auxiliary video supplemental information si_rbsp() |

In the first case, synthetic calculation needs to be performed for auxiliary video supplemental information and a primary coded picture in a video stream. In the second case, synthetic calculation needs to be performed for the auxiliary video supplemental information and an auxiliary coded picture in a video stream. There may be multiple manners for a terminal to distinguish the two cases. For example, nal_unit_type has different values in the two cases. The terminal may make a determination based on the value of nal_unit_type that bears the auxiliary video supplemental information. For another example, if nal_unit_type has the same value in the two cases, the terminal may make a determination depending on whether the video stream carries the auxiliary coded picture.

In the method according to this embodiment, a NAL unit is added to bear auxiliary video supplemental information, so that the auxiliary video supplemental information is carried in a video bit stream. The method provides a universal content distribution interface for media content that includes an auxiliary video, a main video corresponding to the auxiliary video, and auxiliary video supplemental information. Same media content may be directly distributed to different multimedia systems through the universal interface without adding, for the auxiliary video supplemental information, a new bearer structure to an operational network or a medium, thereby reducing the content distribution cost and difficulties. This solution features good network affinity and may be applied to transmission and media storage on various transmission networks.

### Embodiment 3

In this embodiment, H.264 is still used to bear media content that includes an auxiliary video, a main video corresponding to the auxiliary video, and auxiliary video supplemental information. A difference is that the method according to this embodiment defines new supplemental enhancement information, SEI, to bear auxiliary video supplemental information. An SEI message plays an auxiliary role in decoding, displaying, or other processes. As shown in Table 1, one SEI NAL unit may include one or more SEI messages. Each SEI message is distinguished by a different payload type (payload Type). An SEI message is encapsulated in a NAL unit and transmitted as a part of a video bit stream.

In this embodiment, a first case is that the main video and the auxiliary video are two H.264 video bit streams, and the auxiliary video supplemental information is carried in a bit stream of the auxiliary video. In this embodiment, a new SEI message is defined to carry the auxiliary video supplemental information.

Table 5 is an SEI message type defined in this embodiment to bear the auxiliary video supplemental information, where the payload type may be a type value reserved for an SEI message, such as 46. Table 6 is a specific definition of a newly added SEI message structure in this embodiment. Here, the auxiliary video supplemental information is defined by taking an auxiliary video which is a depth map or a parallax map as an example. However, there may be multiple types of auxiliary videos. The auxiliary video includes but is not limited to a depth map or a disparity map. In Table 6, "generic_params" describes a spatial mapping between a sampling point of the auxiliary video and a sampling point of the main video. A definition of generic_params is shown in Table 7. In Table 6, "depth_params" is used for synthesis with a depth map to calculate parallax. A definition of depth_params is shown in Table 8. In Table 6, "Parallax_params" is used to convert a parallax map (that records reference parallax during production) and calculate real parallax during watching. A definition of Parallax_params is shown in Table 9. In Table 6, "reserved_si_message" is a definition reserved for extending other types of auxiliary video supplemental information.

**Table 5**

| Payload type value | SEI message structure |
|---|---|
| 46 | Aux_pic_si(payloadSize) |

**Table 6**

| aux_pic_si(payloadSize) { | Descriptor | Description information |
|---|---|---|
| is_avsi = FALSE | u(1) | A flag bit of the auxiliary video supplemental information |
| auxpicType | u(8) | A type of the auxiliary video |
| if(auxpicType == 0 \|\| auxpicType == 1) { | | |
| is_avsi = TRUE | | |
| **generic_params(**) | | A spatial mapping between the sampling point of the auxiliary video and the sampling point of the main video when sub-sampling is performed for the auxiliary video |
| } | | |
| if(auxpicType == 0) | | |
| **depth_params**() | | Includes parameters used for calculation with the depth map |
| else if(auxpicType == 1) | | |
| **parallax_params**() | | Includes parameters used for calculation with the parallax map |
| Else | | |
| **reserved_si_message(payloadSize)** | | A definition reserved for other types of auxiliary video supplemental information |
| } | | |

**Table 7**

| generic_params() { | Descriptor | |
|---|---|---|
| aux_is_one_field | u(1) | Whether the sampling point of the auxiliary video is a sampling point corresponding to one field or two fields of the main video |
| if (aux_is_one_field) { | | |
| aux_is_bottom_field | u(1) | To which of the two fields of the main video the sampling point of the auxiliary video corresponds |
| } | | |
| else { | | |
| aux_is_interlaced | u(1) | Whether the sampling point of the auxiliary video separately corresponds to the two fields of the main video or corresponds to a sampling point of an entire main video frame |
| } | | |
| position_offset_h | u(8) | A horizontal position offset between the sampling point of the auxiliary video and the sampling point of the main video when sub-sampling is performed for the auxiliary video |
| position_offset_v | u(8) | A vertical position offset between the sampling point of the auxiliary video and the sampling point of the main video when sub-sampling is performed for the auxiliary video |
| } | | |

**Table 8**

| depth_params() { | Descriptor | Description |
|---|---|---|
| Nkfar | u(8) | Specifies a depth range relative to the front and back of a screen |
| Nknear | u(8) | |
| } | | |

**Table 9**

| Parallax_params() { | Descriptor | Description |
|---|---|---|
| Parallax_zero | u(16) | An expressed value of parallax in a case of a zero time difference |
| Parallax_scale | u(16) | A range of the expressed value of parallax |
| dref | u(16) | A watching distance of a reference audience |
| wref | u(16) | A screen width of a reference apparatus |
| } | | |

In this embodiment, a second case is that video coding is performed jointly for the main video, the auxiliary video, and the auxiliary video supplemental information to generate one video bit stream. In the video bit stream, an SEI message in a supplemental enhancement information, SEI, NAL unit is used to bear the auxiliary video supplemental information; a primary coded picture unit is used to bear a main video frame; and an auxiliary coded picture unit is used to bear an auxiliary video frame. An example of a specific definition of the SEI message may be identical to that in the first case, and a value of the payload type may be different from that in the first case.

It should be noted that, in the first case, synthetic calculation needs to be performed for the auxiliary video supplemental information and a primary coded picture in a video stream; in the second case, synthetic calculation needs to be performed for the auxiliary video supplemental information and an auxiliary coded picture in a video stream; and there may be multiple manners for a terminal to distinguish the two cases, for example, the terminal may determine, according to the value of the payload type in the SEI message, for which video frame type the synthetic calculation will be performed along with the auxiliary video supplemental information.

In the method according to this embodiment, an SEI message is added to an SEI NAL unit to bear auxiliary video supplemental information, so that the auxiliary video supplemental information is carried in a bit stream of an auxiliary video. The method provides a universal content distribution interface for media content that includes an auxiliary video, a main video corresponding to the auxiliary video, and auxiliary video supplemental information. Same media content may be directly distributed to different multimedia systems through the universal interface without adding, for the auxiliary video supplemental information, a new bearer structure to an operational network or a medium, thereby reducing the content distribution cost and difficulties. This solution features good network affinity and may be applied to transmission and media storage on various transmission networks.

### Embodiment 4

In this embodiment, MPEG2 is used to bear media content that includes an auxiliary video, a main video corresponding to the auxiliary video, and auxiliary video supplemental information. The method is specifically as follows: coding an auxiliary video and a main video corresponding to the auxiliary video to generate two MPEG2 video bit streams, that is, a bit stream of the main video and a bit stream of the auxiliary video; and accordingly carrying auxiliary video supplemental information in the bit stream of the auxiliary video. Specifically, the auxiliary video supplemental information may be borne by extending a user data structure.

An MPEG2 video bit stream is divided into six layers: video sequence layer (Sequence), group of picture layer (Group of Picture, GOP), picture layer (Picture), slice layer (Slice), macro block layer (Macro Block), and block layer (Block). The stream starts with a sequence header, which may be optionally followed by a group of picture headers and then one or more coded frames.

A user data (such as user_data) structure is generally extended to perform auxiliary display and carry information such as a caption or a display parameter. The user data structure may be located at different layers of a video bit stream. In extension_and_user_data(i), different values of i indicate different positions of the user_data in a video bit stream. For example, the value of i corresponding to the extension_and_user_data behind the video sequence layer is 0, and the value of i corresponding to the extension_and_user_data behind the picture layer is 2. Table 10 shows a specific definition.

| **Table 10** | | |
|---|---|---|
| extension_and_user_data(i) { | | |
| | while((nextbits()==extension_start_code)∥ | |
| | (nextbits()==user_data_start_code)){ | |
| | if(nextbits()==extension_start_code) | |
| | | **extension_data(i)** |
| | if(nextbits()==user_data_start_code) | |
| | | **user_data()** |
| | } | |
| } | | |

In this embodiment, the supplemental information is carried by extending a user data structure. Table 11 shows the user_data structure, where user_data_identifier is a global identifier used to identify a specific user_structure. For example, ATSC has registered "0x47413934" to identify ATSC_user_data and implement a multi-purpose extension of the user_data. To avoid conflicting with user data extended in other systems, the user_data_identifier may use a registered value "0x4D504547" of MPEG.

**Table 11**

| Syntax | | Bits | Format |
|---|---|---|---|
| user_data (){ | | | |
| | user_data_start_code | 32 | Unsigned integer |
| | user_data_identifier | 32 | Unsigned integer |
| | user_structure() | | |
| } | | | |

Table 12 defines an example of the user_structure. The user_data_type_code is used to distinguish different extensions of the user_data in an MPEG system.

**Table 12**

| Syntax | | Bits | Format |
|---|---|---|---|
| user_structure () | | | |
| { | | | |
| | user_data_type_code | | |
| | If(user_data_type_code ==XX) | 8 | Unsigned integer |
| | { | | |
| | User_data_type_structure() | 8 | Unsigned integer |
| | } | | |
| } | | | |

Table 13 defines extended user data types distinguished by different user_data_type_code types. When the user_data_type_code indicates a supplemental information type, corresponding extended user data is the supplemental information.

**Table 13**

| user_data_type_code value | user_data_type_structure |
|---|---|
| 0X01 | SI_data() |
| Other values | reserved |

Table 14 specifically defines a structure of the auxiliary video supplemental information. In this embodiment, to be specific, a supplemental information structure "Si_rbsp" defined in "MPEG C Part 3" is used as an exemplary structure of the supplemental information.

**Table 14**

| Syntax | | Bits | Format |
|---|---|---|---|
| SI_data () | | | |
| { | | | |
| | NumBytesInRBSP | 8 | Unsigned integer |
| | Si_rbsp(NumBytesInRBSP) | | |
| } | | | |

In the method according to this embodiment, a user data structure is extended to carry auxiliary video supplemental information in a bit stream of an auxiliary video. The method provides a universal content distribution interface for media content that includes an auxiliary video, a main video corresponding to the auxiliary video, and auxiliary video supplemental information. Same media content may be directly distributed to different multimedia systems through the universal interface without adding, for the auxiliary video supplemental information, a new bearer structure to an operational network or a medium, thereby reducing the content distribution cost and difficulties. This solution features good network affinity and may be applied to transmission and media storage on various transmission networks.

### Embodiment 5

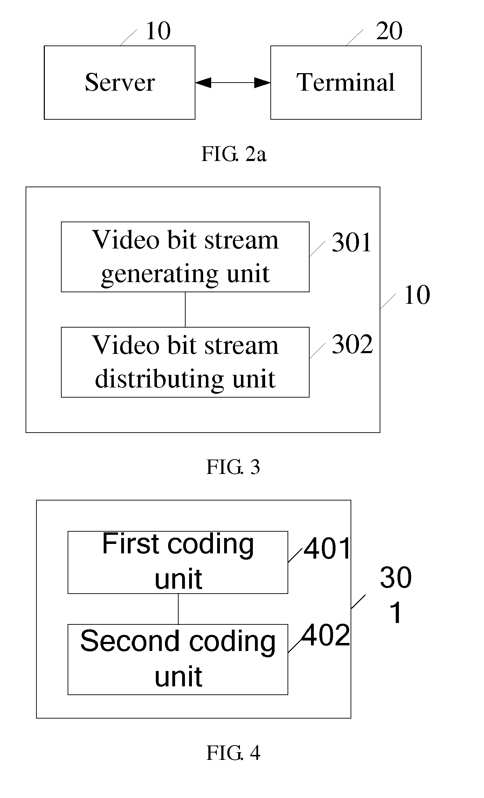

This embodiment provides a method for processing auxiliary video supplemental information. The method corresponds to the bearing methods according to Embodiment 1 to Embodiment 4. FIG. 2 is a flowchart of the method according to this embodiment. As shown in FIG. 2, the method includes the following steps:

S201. Acquire a video bit stream, where the video bit stream includes an auxiliary video, a main video corresponding to the auxiliary video, and auxiliary video supplemental information.

S202. Decode the video bit stream to obtain the auxiliary video, the main video, and the auxiliary video supplemental information.

S203. Perform synthetic calculation and display according to the auxiliary video, the main video, and the auxiliary video supplemental information.

Optionally, the acquired video bit stream includes a bit stream of the main video and a bit stream of the auxiliary video. In this case, S202 may include: decoding the bit stream of the auxiliary video to obtain the auxiliary video and the auxiliary video supplemental information; and decoding the bit stream of the main video to obtain the main video.

Optionally, the acquired video bit stream is one video bit stream. In this case, S202 may include: decoding the one video bit stream to obtain the main video, the auxiliary video, and the auxiliary video supplemental information.

If the acquired video bit stream includes a bit stream of the main video and a bit stream of the auxiliary video when H.264 is used for video decoding, S202 may specifically include: parsing a NAL unit that bears the auxiliary video supplemental information in the bit stream of the auxiliary video to obtain the auxiliary video supplemental information. S202 may also specifically include: parsing a NAL unit that bears the auxiliary video in the bit stream of the auxiliary video to obtain the auxiliary video. S203 may specifically include: synthesizing the auxiliary video supplemental information and a primary coded picture in the bit stream of the auxiliary video.

If the acquired video bit stream is one video bit stream when H.264 is used for video decoding, S202 may specifically include: parsing a NAL unit that bears the auxiliary video supplemental information in the one video bit stream to obtain the auxiliary video supplemental information. S202 may also specifically include: parsing a NAL unit that bears the auxiliary video in the one video bit stream to obtain the auxiliary video, and parsing a NAL unit that bears the main video in the one video bit stream to obtain the main video. S203 may specifically include: synthesizing the auxiliary video supplemental information and an auxiliary coded picture in the video bit stream.

If the acquired video bit stream includes a bit stream of the main video and a bit stream of the auxiliary video when H.264 is used for video decoding, S202 may specifically include: decoding the bit stream of the main video to obtain the main video; and parsing a NAL unit that bears the auxiliary video in the bit stream of the auxiliary video to obtain the auxiliary video, and parsing an SEI message that bears the auxiliary video supplemental information in an SEI NAL unit in the bit stream of the auxiliary video to obtain the auxiliary video supplemental information. S203 may specifically include: synthesizing the auxiliary video supplemental information and a primary coded picture in the bit stream of the auxiliary video.

If the acquired video bit stream is one video bit stream when H.264 is used for video decoding, S202 may specifically include: parsing an SEI message that bears the auxiliary video supplemental information in an SEI NAL unit in the one video bit stream to obtain the auxiliary video supplemental information. S202 may also specifically include: parsing a NAL unit that bears the auxiliary video in the one video bit stream to obtain the auxiliary video, and parsing a NAL unit that bears the main video in the one video bit stream to obtain the main video. S203 may specifically include: synthesizing the auxiliary video supplemental information and an auxiliary coded picture in the video bit stream.

If the acquired video bit stream includes a bit stream of the main video and a bit stream of the auxiliary video when the MPEG2 standard is used for video decoding, S202 may specifically include: decoding the bit stream of the main video to obtain the main video; and decoding the bit stream of the auxiliary video to obtain the auxiliary video and the auxiliary video supplemental information, where the auxiliary video supplemental information may be specifically obtained by parsing a user data structure that bears the auxiliary video supplemental information in the bit stream of the auxiliary video. S203 may specifically include: synthesizing the auxiliary video supplemental information and a video frame in the bit stream of the auxiliary video.

The method according to this embodiment provides a universal content acquiring interface for media content that includes an auxiliary video, a main video corresponding to the auxiliary video, and auxiliary video supplemental information; and has good network affinity and may be applied to transmission and media storage on various transmission networks.

### Embodiment 6

This embodiment provides a system for playing a video to implement the methods for bearing and processing auxiliary video supplemental information described in the foregoing embodiments. FIG. 2a is a diagram of a connection relationship in the system. As shown in FIG. 2a, the system includes: a server 10, configured to generate a video bit stream of media content, and distribute the video bit stream to a transmission network to generate a media stream, or distribute the video bit stream to a medium, where the video bit stream bears auxiliary video supplemental information; and a terminal 20, configured to acquire the video bit stream generated by the server 10, where the video bit stream includes an auxiliary video, a main video corresponding to the auxiliary video, and the auxiliary video supplemental information; decode the video bit stream to obtain the auxiliary video, the main video, and the auxiliary video supplemental information; and perform synthetic calculation and display according to the auxiliary video, the main video, and the auxiliary video supplemental information.

In this embodiment, the auxiliary video supplemental information is information used for synthetic calculation with the auxiliary video. The auxiliary video supplemental information includes but is not limited to one or more of the following defined information types: an auxiliary video type; a spatial mapping between the auxiliary video and a video corresponding to the auxiliary video; and specific calculation parameters corresponding to different types of auxiliary videos.

FIG. 3 is a functional block diagram of the server 10. As shown in FIG. 3, the server 10 includes: a video bit stream generating unit 301, configured to generate a video bit stream of media content, where the video bit stream of media content bears the auxiliary video supplemental information; and a video bit stream distributing unit 302, configured to distribute the video bit stream generated by the video bit stream generating unit 301 to a transmission network to generate a media stream, or distribute the video bit stream to a medium.

FIG. 4 is a first detailed functional block diagram of the video bit stream generating unit 301. As shown in FIG. 4, the video bit stream generating unit 301 includes: a first coding unit 401, configured to perform video coding for the auxiliary video and the auxiliary video supplemental information to generate a bit stream of the auxiliary video; and a second coding 402, configured to perform video coding for the main video corresponding to the auxiliary video to generate a bit stream of the main video.

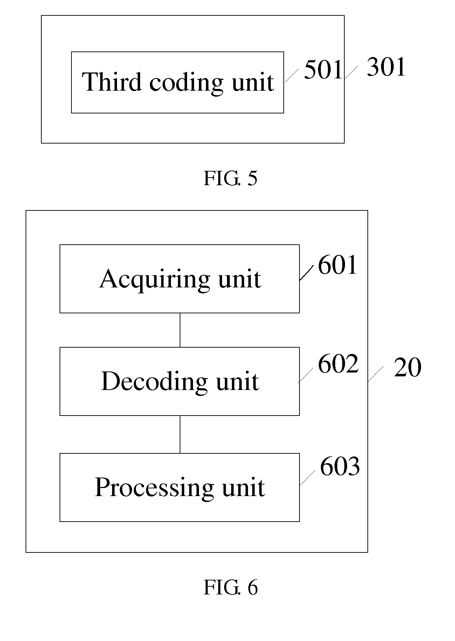

FIG. 5 is a second detailed functional block diagram of the video bit stream generating unit 301. As shown in FIG. 5, the video bit stream generating unit 301 includes: a third coding unit 501, configured to perform video coding jointly for the auxiliary video, the auxiliary video supplemental information, and the main video corresponding to the auxiliary video to generate one video bit stream.

The first coding unit 401 is specifically configured to perform the video coding by using H.264; and use a network abstraction layer NAL unit to bear the auxiliary video supplemental information when the video coding is performed for the auxiliary video and the auxiliary video supplemental information.

The third coding unit 501 is specifically configured to perform the video coding by using H.264; and use a NAL unit to bear the auxiliary video supplemental information when the video coding is performed jointly for the auxiliary video, the auxiliary video supplemental information, and the main video corresponding to the auxiliary video.

The first coding unit 401 is specifically configured to perform the video coding by using H.264; and use an SEI message in a supplemental enhancement information SEI NAL unit to bear the auxiliary video supplemental information when the video coding is performed for the auxiliary video and the auxiliary video supplemental information.

The third coding unit 501 is specifically configured to perform the video coding by using H.264; and use an SEI message in an SEI NAL unit to bear the auxiliary video supplemental information when the video coding is performed jointly for the auxiliary video, the auxiliary video supplemental information, and the main video corresponding to the auxiliary video.

The first coding unit 401 is specifically configured to perform the video coding by using the MPEG2 standard; and use a user data structure to bear the auxiliary video supplemental information when the video coding is performed for the auxiliary video and the auxiliary video supplemental information.

FIG. 6 is a functional block diagram of the terminal 20. As shown in FIG. 6, the terminal 20 includes: an acquiring unit 601, configured to acquire a video bit stream, where the video bit stream includes an auxiliary video, a main video corresponding to the auxiliary video, and auxiliary video supplemental information; a decoding unit 602, configured to decode the video bit stream acquired by the acquiring unit 601 to obtain the auxiliary video, the main video, and the auxiliary video supplemental information; and a processing unit 603, configured to perform synthetic calculation and display according to the auxiliary video, the main video, and the auxiliary video supplemental information that are obtained from the decoding performed by the decoding unit 602.

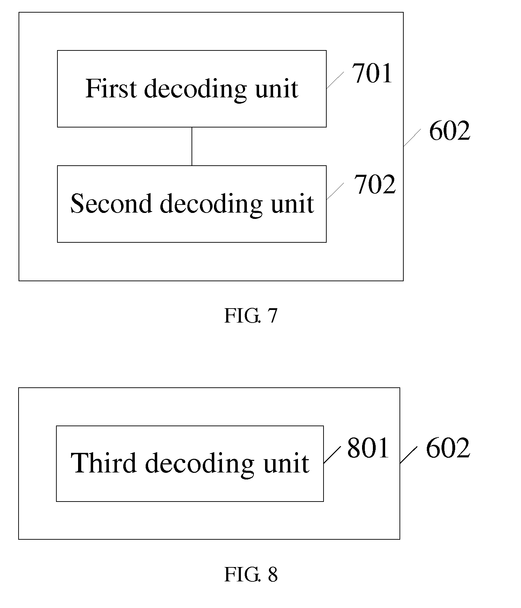

FIG. 7 is a first detailed functional block diagram of the decoding unit 602. As shown in FIG. 7, when the acquired video bit stream includes a bit stream of the main video and a bit stream of the auxiliary video, the decoding unit 602 in this embodiment includes: a first decoding unit 701, configured to decode the bit stream of the auxiliary video to obtain the auxiliary video and the auxiliary video supplemental information; and a second decoding unit 702, configured to decode the bit stream of the main video to obtain the main video.

FIG. 8 is a second detailed functional block diagram of the decoding unit 602. As shown in FIG. 8, when the acquired video bit stream is one video bit stream, the decoding unit 602 in this embodiment includes: a third decoding unit 801, configured to decode the one video bit stream to obtain the main video, the auxiliary video, and the auxiliary video supplemental information.

Specifically, when the server 10 uses H.264 for video coding and performs video coding separately for the main video and the auxiliary video, the terminal 20 also uses H.264 for video decoding. In this case, the first decoding unit 701 is configured to parse a NAL unit that bears the auxiliary video supplemental information in the bit stream of the auxiliary video to obtain the auxiliary video supplemental information; and the processing unit 603 is configured to synthesize the auxiliary video supplemental information and a primary coded picture in the bit stream of the auxiliary video.

Specifically, when the server 10 uses H.264 for video coding and performs video coding jointly for the main video and the auxiliary video to generate one video bit stream, the terminal 20 also uses H.264 for video decoding. In this case, the third decoding unit 801 is configured to parse a NAL unit that bears the auxiliary video supplemental information in the one video bit stream to obtain the auxiliary video supplemental information; and the processing unit 603 is configured to synthesize the auxiliary video supplemental information and an auxiliary coded picture in the video bit stream.

Specifically, when the server 10 uses H.264 for video coding and performs video coding separately for the main video and the auxiliary video, the terminal 20 also uses H.264 for video decoding. In this case, the first decoding unit 701 is further configured to parse an SEI message that bears the auxiliary video supplemental information in an SEI NAL unit in the bit stream of the auxiliary video to obtain the auxiliary video supplemental information; and the processing unit 603 is further configured to synthesize the auxiliary video supplemental information and a primary coded picture in the bit stream of the auxiliary video.

Specifically, when the server 10 uses H.264 for video coding and performs video coding jointly for the main video and the auxiliary video to generate one video bit stream, the terminal 20 also uses H.264 for video decoding. In this case, the third decoding unit 801 is configured to decode the one video bit stream to obtain the main video, the auxiliary video, and the auxiliary video supplemental information, where the auxiliary video supplemental information may be specifically obtained by parsing an SEI message that bears the auxiliary video supplemental information in an SEI NAL unit in the one video bit stream; and the processing unit 603 is configured to synthesize the auxiliary video supplemental information and an auxiliary coded picture in the video bit stream.

Specifically, when the server 10 uses the MPEG2 standard for video coding, the terminal 20 also uses the MPEG2 standard for video decoding. In this case, the first decoding unit 701 is configured to parse a user data structure that bears the auxiliary video supplemental information in the bit stream of the auxiliary video to obtain the auxiliary video supplemental information; and the processing unit 603 is configured to synthesize the auxiliary video supplemental information and a video frame in the bit stream of the auxiliary video.

The following describes an operating principle of the system in this embodiment by taking a three-dimensional television system as an example. The following description, however, is used only to explain the technical solution in this embodiment of the present invention other than limiting the protection scope of the claims. All other systems for playing a video besides the three-dimensional television system shall fall within the protection scope of the claims, provided that these systems are capable of implementing functions in this embodiment of the present invention.

A process of playing a video by using a three-dimensional television system according to this embodiment of the present invention is as follows:

(1) A server side produces three-dimensional data content.

Representation of data of three-dimensional content based on a two-dimensional plus auxiliary video format includes a two-dimensional video, an auxiliary video of the two dimensional video, and auxiliary video supplemental information. For example, a depth map (depth map) may be regarded as an auxiliary video (auxiliary video) of a two-dimensional video. A pixel in the depth map indicates a depth value. A depth value correspondingly describes depth of a pixel of the two-dimensional video, and an N-bit value is used for representation. Generally, a value of N is 8. The depth map may be regarded as one monochrome video for processing. In a three-dimensional system, because parallax is inversely proportional to depth, a parallax map (parallax map) is also an auxiliary video of a two-dimensional video.

An existing video coding standard is used to code and transmit three-dimensional video content.

There are numerous types of auxiliary videos, and their functions also vary according to different types. For example, an auxiliary video may describe transparency information of a main video for two-dimensional display. Therefore, an auxiliary video is not limited to a depth map, a parallax map, or a transparency map mentioned here; and a definition of the auxiliary video supplemental information varies according to different types of auxiliary videos.

(2) A terminal acquires the three-dimensional content represented in two-dimensional plus auxiliary video format from a received media stream or from a medium.

The terminal synthesizes the three-dimensional content based on the two-dimensional plus auxiliary video format, and needs to obtain left-eye and right-eye video frames with parallax through calculation according to the two-dimensional video and the auxiliary video. First, actually displayed parallax is calculated according to the auxiliary video and the auxiliary video supplemental information (For example, the auxiliary video is a depth map, and then actually displayed parallax of each pixel is calculated according to a depth value). The parallax directly reflects a user's perception of depth. For positive parallax, the depth perceived by the user is behind a screen; for negative parallax, the depth perceived by the user is in front of the screen; and zero parallax is located on the screen. Second, left-eye and right-eye video frames with parallax are obtained through calculation according to the two-dimensional video and actually displayed parallax of various pixels.

During terminal display, a left view and a right view are displayed alternately or separately on the screen. A left eye views only the left view, and a right eye views only the right view through tailor-made three-dimensional glasses or a tailor-made display system, so that the user is deeply aware of the video content.

In the system according to this embodiment, auxiliary video supplemental information is directly carried in a video bit stream, and is media content that includes an auxiliary video, a main video corresponding to the auxiliary video, and auxiliary video supplemental information; and same media content may be directly distributed to different multimedia systems through the universal interface without adding, for the auxiliary video supplemental information, a new bearer structure to an operational network or a medium, thereby reducing the content distribution cost and difficulties. This solution features good network affinity and may be applied to transmission and media storage on various transmission networks.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), or a random access memory (Random Access Memory, RAM).

The foregoing embodiments are merely intended for describing the technical solutions of the embodiments of the present invention other than limiting the present invention. Although the embodiments of the present invention are described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the spirit and scope of the technical solutions of the embodiments of the present invention.

## Claims

1. A method for bearing auxiliary video supplemental information, comprising:
bearing auxiliary video supplemental information in a video bit stream; and
distributing the video bit stream to a transmission network to generate a media stream, or distributing the video bit stream to a medium.

2. The method according to claim 1, wherein the bearing auxiliary video supplemental information in a video bit stream comprises:
performing video coding for an auxiliary video and the auxiliary video supplemental information to generate a bit stream of the auxiliary video; and performing video coding for a main video corresponding to the auxiliary video to generate a bit stream of the main video.

3. The method according to claim 1, wherein the bearing auxiliary video supplemental information in a video bit stream comprises:
performing video coding jointly for an auxiliary video, the auxiliary video supplemental information, and a main video corresponding to the auxiliary video to generate one video bit stream.

4. The method according to claim 2, wherein H.264 is used to perform the video coding, and a network abstraction layer, NAL, unit is used to bear the auxiliary video supplemental information when the video coding is performed for the auxiliary video and the auxiliary video supplemental information.

5. The method according to claim 3, wherein H.264 is used to perform the video coding, and a NAL unit is used to bear the auxiliary video supplemental information when the video coding is performed jointly for the auxiliary video, the auxiliary video supplemental information, and the main video corresponding to the auxiliary video.

6. The method according to claim 2, wherein H.264 is used to perform the video coding, and an supplemental enhancement information, SEI, message in a SEI NAL unit is used to bear the auxiliary video supplemental information when the video coding is performed for the auxiliary video and the auxiliary video supplemental information.

7. The method according to claim 3, wherein H.264 is used to perform the video coding, and an SEI message in an SEI NAL unit is used to bear the auxiliary video supplemental information when the video coding is performed jointly for the auxiliary video, the auxiliary video supplemental information, and the main video corresponding to the auxiliary video.

8. The method according to claim 2, wherein MPEG2 standard is used to perform the video coding, and a user data structure is used to bear the auxiliary video supplemental information when the video coding is performed for the auxiliary video and the auxiliary video supplemental information.

9. The method according to any one of claims 1 to 8, wherein the auxiliary video supplemental information comprises one or more combinations of the following information:
an auxiliary video type;
a spatial mapping between the auxiliary video and the main video corresponding to the auxiliary video; and
calculation parameters corresponding to different types of auxiliary videos.

10. A method for processing auxiliary video supplemental information, comprising:
acquiring a video bit stream, wherein the video bit stream comprises an auxiliary video, a main video corresponding to the auxiliary video, and auxiliary video supplemental information;
decoding the video bit stream to obtain the auxiliary video, the main video, and the auxiliary video supplemental information; and
performing synthetic calculation and display according to the auxiliary video, the main video, and the auxiliary video supplemental information.

11. The method according to claim 10, wherein the acquired video bit stream comprises a bit stream of the main video and a bit stream of the auxiliary video; and the decoding the video bit stream to obtain the auxiliary video, the main video, and the auxiliary video supplemental information comprises:
decoding the bit stream of the auxiliary video to obtain the auxiliary video and the auxiliary video supplemental information; and
decoding the bit stream of the main video to obtain the main video.

12. The method according to claim 10, wherein the acquired video bit stream is one video bit stream; and the decoding the video bit stream to obtain the auxiliary video, the main video, and the auxiliary video supplemental information comprises:
decoding the one video bit stream to obtain the main video, the auxiliary video, and the auxiliary video supplemental information.

13. The method according to claim 11, wherein H.264 is used to perform the video decoding; and the decoding the bit stream of the auxiliary video to obtain the auxiliary video and the auxiliary video supplemental information comprises:
parsing a network abstraction layer, NAL, unit that bears the auxiliary video supplemental information and is in the bit stream of the auxiliary video to obtain the auxiliary video supplemental information.

14. The method according to claim 12, wherein H.264 is used to perform the video decoding; and the decoding the video bit stream to obtain the main video, the auxiliary video, and the auxiliary video supplemental information comprises:
parsing a NAL unit that bears the auxiliary video supplemental information and is in the one video bit stream to obtain the auxiliary video supplemental information.

15. The method according to claim 11, wherein H.264 is used to perform the video decoding; and the decoding the bit stream of the auxiliary video to obtain the auxiliary video and the auxiliary video supplemental information comprises:
parsing an supplemental enhancement information, SEI, message that bears the auxiliary video supplemental information to obtain the auxiliary video supplemental information, wherein the SEI message is in a SEI NAL unit, and the SEI NAL unit is in the bit stream of the auxiliary video.

16. The method according to claim 12, wherein H.264 is used to perform the video coding; and the decoding the one video bit stream to obtain the main video, the auxiliary video, and the auxiliary video supplemental information comprises:
parsing an SEI message that bears the auxiliary video supplemental information to obtain the auxiliary video supplemental information, wherein the SEI message is in an SEI NAL unit, and the SEI NAL unit is in the one video bit stream.

17. The method according to claim 11, wherein MPEG2 standard is used to perform the video decoding; and the decoding the bit stream of the auxiliary video to obtain the auxiliary video and the auxiliary video supplemental information comprises:
parsing a user data structure that bears the auxiliary video supplemental information and is in the bit stream of the auxiliary video to obtain the auxiliary video supplemental information.

18. A media content server, comprising:
a video bit stream generating unit, configured to generate a video bit stream of media content, wherein the video bit stream of media content bears auxiliary video supplemental information; and
a video bit stream distributing unit, configured to distribute the video bit stream generated by the video bit stream generating unit to a transmission network to generate a media stream, or distribute the video bit stream to a medium.

19. The media content server according to claim 18, wherein the video bit stream generating unit comprises:
a first coding unit, configured to perform video coding for an auxiliary video and the auxiliary video supplemental information to generate a bit stream of the auxiliary video; and
a second coding unit, configured to perform video coding for a main video corresponding to the auxiliary video to generate a bit stream of the main video.

20. The media content server according to claim 18, wherein the video bit stream generating unit comprises:
a third coding unit, configured to perform video coding jointly for an auxiliary video, the auxiliary video supplemental information, and a main video corresponding to the auxiliary video to generate one video bit stream.

21. The media content server according to claim 19, wherein:
the first coding unit is specifically configured to perform the video coding by using H.264; and when the video coding is performed for the auxiliary video and the auxiliary video supplemental information, use a network abstraction layer, NAL, unit to bear the auxiliary video supplemental information.

22. The media content server according to claim 20, wherein:
the third coding unit is specifically configured to perform the video coding by using H.264; and when the video coding is performed jointly for the auxiliary video, the auxiliary video supplemental information, and the main video corresponding to the auxiliary video, use a NAL unit to bear the auxiliary video supplemental information.

23. The media content server according to claim 19, wherein:
the first coding unit is specifically configured to perform the video coding by using H.264; and when the video coding is performed for the auxiliary video and the auxiliary video supplemental information, use an SEI message in a supplemental enhancement information, SEI, NAL unit to bear the auxiliary video supplemental information.

24. The media content server according to claim 20, wherein:
the third coding unit is specifically configured to perform the video coding by using H.264; and when the video coding is performed jointly for the auxiliary video, the auxiliary video supplemental information, and the main video corresponding to the auxiliary video, use an SEI message in an SEI NAL unit to bear the auxiliary video supplemental information.

25. The media content server according to claim 19, wherein:
the first coding unit is specifically configured to perform the video coding by using the MPEG2 standard; and when the video coding is performed for the auxiliary video and the auxiliary video supplemental information, use a user data structure to bear the auxiliary video supplemental information.

26. A terminal for displaying media content, comprising:
an acquiring unit, configured to acquire a video bit stream, wherein the video bit stream comprises an auxiliary video, a main video corresponding to the auxiliary video, and auxiliary video supplemental information;
a decoding unit, configured to decode the video bit stream acquired by the acquiring unit to obtain the auxiliary video, the main video, and the auxiliary video supplemental information; and
a processing unit, configured to perform synthetic calculation and display according to the auxiliary video, the main video, and the auxiliary video supplemental information that are obtained from the decoding performed by the decoding unit.

27. The terminal according to claim 26, wherein, when the acquired video bit stream comprises a bit stream of the main video and a bit stream of the auxiliary video, the decoding unit comprises:
a first decoding unit, configured to decode the bit stream of the auxiliary video to obtain the auxiliary video and the auxiliary video supplemental information; and
a second decoding unit, configured to decode the bit stream of the main video to obtain the main video.

28. The terminal according to claim 26, wherein, when the obtained video bit stream is one video bit stream, the decoding unit comprises:
a third decoding unit, configured to decode the one video bit stream to obtain the main video, the auxiliary video, and the auxiliary video supplemental information.

29. The terminal according to claim 27, wherein, when video decoding is performed by using H.264,
the first decoding unit is specifically configured to parse a network abstraction layer, NAL, unit that bears the auxiliary video supplemental information in the bit stream of the auxiliary video to obtain the auxiliary video supplemental information.

30. The terminal according to claim 28, wherein, when video decoding is performed by using H.264,
the third decoding unit is specifically configured to parse a NAL unit that bears the auxiliary video supplemental information in the one video bit stream to obtain the auxiliary video supplemental information.

31. The terminal according to claim 27, wherein, when video decoding is performed by using H.264,
the first decoding unit is specifically configured to parse an SEI message that bears the auxiliary video supplemental information in a supplemental enhancement information, SEI, NAL unit in the bit stream of the auxiliary video to obtain the auxiliary video supplemental information.

32. The terminal according to claim 28, wherein, when video decoding is performed by using H.264,
the third decoding unit is specifically configured to parse an SEI message that bears the auxiliary video supplemental information in an SEI NAL unit in the one video bit stream to obtain the auxiliary video supplemental information.

33. The terminal according to claim 27, wherein, when video decoding is performed by using the MPEG2 standard,
the first decoding unit is specifically configured to parse a user data structure that bears the auxiliary video supplemental information in the bit stream of the auxiliary video to obtain the auxiliary video supplemental information.

34. A system for playing a video, comprising the media content server according to any one of claims 18 to 25 and/or comprises the terminal according to any one of claims 26 to 33.
